# NEUE EUROPÄISCHE PATENTSCHRIFT

(11) **EP 0 978 589 B2**
(45) Veröffentlichungstag und Bekanntmachung des Hinweises auf die Entscheidung über den Einspruch: **26.03.2008**
(45) Hinweis auf die Patenterteilung: 06.10.2004
(21) Anmeldenummer: 99115514.4
(22) Anmeldetag: 05.08.1999
(51) Int. Cl.: D21G 1/00

(54) **Vorrichtung zum aktiven Schwächen unerwünschter Schwingungen einer rotierenden Walze**
Apparatus for actively reducing unwanted vibrations of a rotating cylinder
Dispositif de réduction active de vibrations non-voulues d'un rouleau rotatif

(30) Priorität: 06.08.1998 DE 19835649; 02.07.1999 DE 19930600
(43) Veröffentlichungstag der Anmeldung: 09.02.2000
(60) Teilanmeldung: 04011205.4
(73) Patentinhaber: Voith Patent GmbH, 89522 Heidenheim (DE)
(72) Erfinder: Kustermann, Martin, Dr., 89522 Heidenheim (DE); Klug, Alexander, 86720 Nördlingen (DE)
(74) Vertreter: Jantsch, Sigrid

(56) Entgegenhaltungen:
- EP-A- 0 538 221
- EP-A- 0 595 072
- EP-A- 0 612 933
- EP-A- 0 616 202
- WO-A-97/03832
- DD-A- 246 837
- DE-A- 3 639 009
- DE-A- 4 232 920
- DE-A- 19 522 272
- DE-A- 19 652 769
- DE-C- 19 821 854
- US-A- 5 562 027
- Heise, H., Enhanced paper machine runnability utilizing an on-line efficiency system, Tappi Journal, April 1991, P. 121-130
- Hermanski, M., Barringbildung am Glaettkalander einer Papiermaschine, Das Papier, 1995, Heft 9, Seiten 581-590
- The laser velocity transducer - Its principles and applications, Bruel&Kjaer, application notes, Mark Serridge
- Huette, Die Grundlagen der Ingenieurwissenschaften, 30. neubearbeitete und erweiterte Auflage, Springer, 1996, Abschnitt H, "+.3 Messfehler", insbesondere "1.3.1 Zufaellige und systematische Fehler", S. H8-H11
- I.T. Pye, Calender Barring in Newsprint, pulp and paper magazine of Canada, April 1963, p. T-194 to T-204

## Beschreibung

Die Erfindung betrifft eine Vorrichtung zum aktiven Schwächen unerwünschter Schwingungen einer rotierenden Walze, wobei die Vorrichtung eine Schwingungserfassungs Sensoreinrichtung umfaßt, sowie eine Kraftgeräteinrichtung, welche in Abhängigkeit des Erfassungsergebnisses auf die Walze im Sinne einer Schwächung der unerwünschten Schwingungen einwirkt. Die erfindungsgemäße Vorrichtung ist beispielsweise zum Einsatz in Maschinen zum Herstellen oder/und Veredeln, insbesondere Beschichten, einer Materialbahn, insbesondere aus Papier oder Karton, gedacht.

Eine derartige Vorrichtung ist aus der Druckschrift EP 0 612 933 A1 bekannt. Diese Druckschrift offenbart eine Vorrichtung zur Verringerung einer Schwingung einer rotierenden Walze einer Textilmaschine. Dabei ist auf der die Walze tragenden Achse eine Mehrzahl von in zueinander sowie zur Achsenlängsrichtung orthogonalen Richtungen wirkenden Elektromagneten angeordnet, welche mit einem die Elektromagneten radial außen umgebenden und mit der Walze gemeinsamen drehenden Joch zusammenwirken. An der ortsfesten Achse sind zwei Sensoren angeordnet, welche den Abstand zwischen sich und dem Joch erfassen. Dabei werden die Abstände in zwei zueinander und zur Achsenlängsrichtung orthogonalen Richtungen erfasst. Die Elektromagnete werden nach Maßgabe der Sensorsignale angesteuert, um durch gezieltes Ausüben örtlicher Anziehungskräfte auf das Joch einen vorbestimmten Soll-Abstand zwischen den Sensoren und dem drehenden Joch herzustellen.

Eine weitere Vorrichtung ist beispielsweise aus der DE 196 52 769 A1 bekannt. Der Schwingungssensor der bekannten Vorrichtung ist dabei gemäß einer ersten alternativen Ausführungsform an einer Lagerstelle bzw. den Lagerstellen der Walze angeordnet. Gemäß einer zweiten alternativen Ausführungsform schlägt die DE 196 52 769 A1 vor, den Schwingungssensor in der Maschinenmitte anzuordnen. In einer Versuchsanordnung wurde ein kapazitiver Sensor eingesetzt, der in Maschinenmitte, d.h. im Bereich der Längsmitte der Walze, in unmittelbarer Nähe der im wesentlichen kreiszylindrischen Mantelfläche der Walze angebracht war.

Die Anordung des Schwingungssensors im Bereich der Maschinenmitte hat den Vorteil, daß die Amplitude der Schwingungen dort aufgrund des großen Abstands von den Lagerstellen der Walze und der hieraus resultierenden großen "Ausschläge" der Walze (z.B. durch zusätzliche Biegeschwingungsbeiträge) mit hoher Genauigkeit erfaßt werden kann. Nachteilig ist es jedoch, daß der kapazitive Sensor der Walzenoberfläche unmittelbar benachbart angeordnet werden muß. Zum einen beschwört dies bei Einsatz der Schwingungsschwächungsvorrichtung in einer Maschine zum Herstellen oder/und Beschichten einer Materialbahn, insbesondere aus Papier oder Karton, das Risiko herauf, daß der Sensor bei einem Abriß der Materialbahn und dem anschließenden sogenannten "Einpacken" der Walze beschädigt wird. Zum anderen besteht die Gefahr, daß die Funktionsfähigkeit des Sensors infolge Verschmutzung durch Beschichtungsmedium, Faserstoffe oder dergleichen beeinträchtigt wird. Darüber hinaus erschwert ein in unmittelbarer Nähe der Mantelfläche der Walze angeordneter Sensor für das Wartungs- oder Betriebspersonal den Zugang zu der bzw. Zugriff auf die Mantelfläche. Schließlich hat es sich als schwierig erwiesen, die Schwingungsamplitude an beschichteten, beispielsweise gummierten oder/und mit einem Film von Beschichtungsmedium versehenen, Oberflächen präzise zu erfassen.

Sensoren, die an den Lagerstellen der Walze angeordnet sind, weisen zwar die vorstehend diskutierten Nachteile nicht auf. Jedoch ist es aufgrund der Tatsache, daß die Lagerstellen mit Schwingungsknoten der unerwünschten Schwingungen der Walze zusammenfallen, erheblich schwieriger, die Schwingungsamplitude an den Lagerstellen mit der erforderlichen Präzision zu erfassen als im Bereich der Maschinenmitte.

Aus der WO 97/03832 ist ein Verfahren und eine Vorrichtung zur Verminderung von Biegeschwingungen rotierender Systeme bekannt, welche zum Einsatz bei Presseur-Walzen von Tiefdruckmaschinen konzipiert sind. Die Arbeitsbreite und die Laufgeschwindigkeit der Materialbahnen in derartigen Tiefdruckmaschinen unterscheidet sich erheblich von jenen in einer Maschine zum Herstellen oder/und Beschichten der Materialbahnen.

Dokument DE 36 39 009 A1 beschreibt eine Vorrichtung zum aktiven Schwächen unerwünschter Schwingungen einer rotierenden Walze, allerdings wird hier in der dargestellten Ausführungsform ein passives System genutzt, das ohne einen Sensor auskommt und bei dem Schwingungen der Walze lediglich passiv über Reibungsflächen und einen regelbaren Anpressdruck derselben geschwächt werden.

Die Druckschrift "Enhanced paper-machine runnability utilizing an on-line efficiency system", H. Heise, Tappi Journal 1991, S. 121-130, zeigt eine Vorrichtung zum Überwachen und Analysieren von Schwingungen einer rotierenden Walze.

Die Druckschrift "Barringbildung am Glättkalander einer Papiermaschine", M. Hermanski, Das Papier 1995, Heft 9, Seiten 581-590 beschreibt die Verwendung eines Laservibrometers bei der Messung von Schwingungen an einer rotierenden Walze.

Dokument EP 0 616 202 A1 offenbart eine weitere Vorrichtung zum Messen von Schwingungen einer rotierenden Walze, bei der piezoelektrische Sensoren oder Druckmessstreifen außen an der Mantelfläche einer Walze angebracht und von einer Beschichtung bedeckt sind.

Die Druckschrift "The Laser Velocity Transducer - Its Principles and Applications", Brüel & Kjaar, application notes, Mark Serridge beschreibt allgemein das Messen von Schwingungen mit einem Laservibrometer unter Verwendung des Dopplereffekts und Dokument DE 195 22 272 A1 zeigt allgemein die Verwendung eines Laservibrometers zur Messung von Flächenschwingungen am Beispiel von Automobiltüren.

Schließlich wird auf die nachveröffentlichte EP-A-0956950 hingewiesen.

Es ist Aufgabe der vorliegenden Erfindung, die aus dem Stand der Technik bekannten Vorrichtungen zu verbessern.

Diese Aufgabe wird mit Vorrichtungen erreicht, wie sie in den unabhängigen Ansprüchen definiert sind.

Gemäß einem ersten Gesichtspünkt des vorliegenden Erfindung ist das wenigstens eine druck- oder/und zug-sensitive Element an der Innenfläche des Walzenzylinders angeordnet, wo es durch den Walzenmantel, der beispielsweise aus Stahl gefertigt ist, vor äußeren Einflüssen beispielsweise infolge eines Bahnabrisses geschützt ist. Im Falle innengekühlter Walzen ist lediglich sicherzustellen, daß das druck- oder/und zug-sensitive Element gegenüber dem Kühlmedium, beispielsweise Wasser, resistent ist.

Gemäß einem zweiten Gesichtspünkt des vorliegenden Erfindung wird bei einer Maschine mit zwei Walzen, die miteinander einen sogenannten "Nip" bilden, durch den sich die Materialbahn hindurchbewegt, eine besonders gute Signalerfassung dadurch erreicht, daß man eine optische Sensoreinheit in der Verbindungsebene der Achsen der beiden Walzen anordnet.

Der Abstand zwischen Sensoreinheit und Walzenoberfläche kann dabei problemlos derart gewählt werden, daß die Sensoreinheit weder durch Beschichtungsmaterial-Spritzer verschmutzt noch bei einem Bahnabriß beschädigt werden kann. Darüber hinaus ist aufgrund des großen Abstands zwischen Sensoreinheit und Walzenoberfläche der ungehinderte Zugang zur Walzenoberfläche ohne weiteres gewährleistet. Die Anordnung der Sensoreinheit im Bereich der Maschinenmitte kann eine präzise Erfassung der Amplitude der Walzenschwingung sicherstellen.

Für den freien Zugang zur Mantelfläche der Walze ist es von Vorteil, wenn die optische Sensoreinheit von der Walzenoberfläche einen Abstand von wenigstens einem Meter aufweist.

Es können auf verschiedenen Meßprinzipien beruhende Sensoreinheiten zum Einsatz kommen:

Beispielsweise kann die optische Sensoreinheit ein Laser-Vibrometer umfassen, wie es im Stand der Technik an sich bekannt ist und beispielsweise unter der Bezeichnung VH 300 von der Firma Ometron, Inc., Dulles, U.S.A. bezogen werden kann. Dieses Laser-Vibrometer erfaßt die Schwingung der Walze als die parallel zum messenden Laserstrahl verlaufende Komponente der Oberflächengeschwindigkeit der sich drehenden Walze.

Zusätzlich oder alternativ ist es auch möglich, daß eine interferometrisch arbeitende Sensoreinheit mechanische Spannungszustände der Walzenoberfläche erfaßt. Derartige interferometrische Sensoreinheiten sind beispielsweise aus dem Bereich der zerstörungsfreien Werkstoffanalyse bekannt. Gemäß einem dritten Gesichtspünkt des vorliegenden den Erfindung ist vorgesehen, daß die interferometrische Sensoreinheit die mechanischen Spannungszustände im Bereich eines Deckelabschnitts der Walze erfaßt, in welchem sich die Walzenoberfläche von der im wesentlichen kreiszylindrischen Mantelfläche zu den Walzenzapfen verjüngt. Gerade im Übergangsbereich zwischen der Mantelfläche und dem Deckelabschnitt sowie im Übergangsbereich zwischen dem Deckelabschnitt und dem Walzenzapfen sind die von den unerwünschten Schwingungen hervorgerufenen Änderungen der Oberflächenspannung der Walze besonders deutlich. Die Erfassung der mechanischen Spannungszustände der Walze im Bereich des Deckelabschnitts hat darüber hinaus den Vorteil, daß die interferometrische Sensoreinheit in Achsrichtung der Walze gesehen vor bzw. hinter dieser angeordnet werden kann und so den freien Zugang zur Mantelfläche der Walze nicht behindert. Die Spannungszustände im Deckelbereich können aber auch durch andere geeignete Spannungssensoren, beispielsweise Dehnungsmeßstreifen, erfaßt werden.

Bei einer erfindungsgemäßen Vorrichtung, welche ferner eine Steuereinheit umfaßt, die auf Grundlage von Erfassungssignalen der wenigstens einen Sensoreinrichtung Stellsignale für die wenigstens eine Kraftgeräteinheit bestimmt, wird vorgeschlagen, daß die Steuereinheit zur Bestimmung der Stellsignale die Erfassungssignale einer Mehrzahl von Sensoren additiv oder/und subtraktiv oder/und gewichtet oder/und gemittelt oder/und phasenkorrigiert miteinander kombiniert. Hierdurch können Besonderheiten des Schwingungsverhaltens der Walze in Abhängigkeit von den jeweiligen Betriebsparametern sowie Besonderheiten der eingesetzten Sensoreinheiten, insbesondere, was deren Empfindlichkeit in verschiedenen Bereichen von Schwingungsfrequenzen anbelangt, berücksichtigt werden.

Dabei ist es auch möglich, daß die Steuereinheit die Erfassungssignale wenigstens einer an den Lagern der Walze angeordneten Sensoreinrichtung berücksichtigt, beispielsweise eines druck- oder/und zug-sensitiven Elements, eines Beschleunigungssensors (zur Erfassung von Radialbeschleunigungen) oder dergleichen.

Nachzutragen ist noch, daß mit den Worten "im Bereich der Maschinenmitte" ein relativ weiter Bereich um die exakte Längsmitte der Walze bezeichnet ist. Der Grund hierfür ist folgender: Die Verformung der Walze infolge der Schwingung folgt unter Berücksichtigung auftretender Zentrifugalkräfte in guter erster Näherung einer zwischen den beiden seitlichen Lagerstellen und zur Maschinenmitte im wesentlichen symmetrisch verlaufenden Parabel. Bekanntermaßen ändert sich der Wert einer Parabel in der Umgebung des Maximums nur wenig.

Im Hinblick auf die Präzision der Erfassung der Schwingungsausschläge der Walze kann der "Bereich der Maschinenmitte" daher als der Bereich zwischen den beiden Stellen in Achsrichtung der Walze definiert werden, an denen der Schwingungsausschlag etwa 75% des Maximalausschlages in der exakten Maschinenmitte beträgt.

Die Erfindung wird im folgenden an Ausführungsbeispielen anhand der beigefügten Zeichnungen näher erläutert werden. Es stellt dar:
- Fig. 1: eine schematische Darstellung einer erfindungsgemäßen Vorrichtung zum aktiven Schwächen unerwünschter Schwingungen einer rotierenden Walze, welche in einer Streichstation zum Einsatz kommt; und
- Fig. 2: eine Schnittdarstellung längs der Linie II-II in Fig. 1.

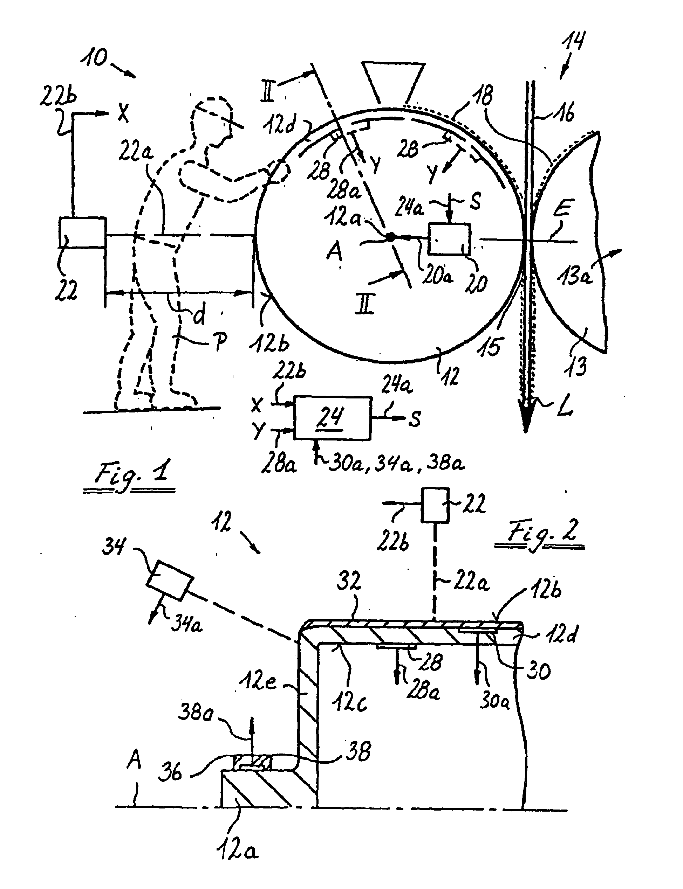

In Fig. 1 ist eine erfindungsgemäße aktive Schwingungsschwächungsvorrichtung allgemein mit 10 bezeichnet. In dem dargestellten, nicht beschränkenden Einsatzbeispiel dient die Vorrichtung 10 zum Schwächen bzw. Kompensieren bzw. Mindern bzw. Dämpfen unerwünschter Schwingungen einer sich um eine Achse A drehenden Walze 12 einer Streichvorrichtung 14 zum indirekten beidseitigen Beschichten einer Materialbahn 16 mit einem flüssigen oder pastösen Auftragsmedium 18. Bereits an dieser Stelle sei jedoch darauf hingewiesen, daß die erfindungsgemäße Vorrichtung mit Vorteil ebensogut auch an anderen rotierenden Walzen eingesetzt werden kann, wie sie in Maschinen zum Herstellen oder/und Beschichten von Materialbahnen, insbesondere aus Papier oder Karton, in vielfältiger Weise vorhanden sind.

In dem Ausführungsbeispiel gemäß Fig. 1 bewegt sich die Materialbahn 16 in Laufrichtung L durch einen "Nip" 15 hindurch, der zwischen zwei benachbart angeordneten Walzen 12 und 13 gebildet ist.

Die aktive Schwächungsvorrichtung 10 umfaßt wenigstens ein Kraftgerät 20, welches mit einem Stellglied 20a auf den Lagerzapfen 12a der Walze 12 einwirkt. Die Einwirkung erfolgt dabei phasenversetzt, vorzugsweise gegenphasig, zu den unerwünschten Schwingungen der Walze 12, wie dies im Stand der Technik bekannt und beispielsweise in der DE 196 52 769 A1 detailliert erläutert ist.

Zur Erfassung der Schwingungen der Walze 12 kann eine Reihe verschiedener Sensoreinheiten eingesetzt werden, die nachstehend im einzelnen erläutert werden, denen jedoch gemeinsam ist, daß sie an einer Stelle angeordnet sind, an der sie weder der Gefahr von Verschmutzung oder/und Schädigung ausgesetzt sind noch den freien Zugang einer Wartungs- oder Bedienungsperson P zur Walzenoberfläche 12 behindern.

So kann beispielsweise in einem Abstand d von der Walzenoberfläche 12b ein Laser-Vibrometer 22 angeordnet sein, dessen Laserstrahl 22a auf die Walzenoberfläche 12b gerichtet ist. Derartige Laser-Vibrometer sind im Stand der Technik bekannt und können beispielsweise unter der Bezeichnung VH 300 von der Firma Ometron Inc., Dulles, U.S.A. bezogen werden. Laser-Vibrometer der genannten Art bestimmen die Schwingungen der Walze 12 aus der parallel zum Laserstrahl 22a gerichteten Komponente der Geschwindigkeit der Walzenoberfläche 12b. Im Hinblick auf eine möglichst hohe Erfassungsgenauigkeit ist das Laser-Vibrometer 22 in der Ebene E angeordnet, welche die Achsen 12a und 13a der beiden Walzen 12, 13 miteinander verbindet.

Das Erfassungssignal des Laser-Vibrometers 22 wird über eine Signalleitung 22b an eine Steuereinheit 24 übermittelt, welche unter Verwendung dieser Erfassungssignale Stellsignale für das Kraftgerät 20 bestimmt und über eine Signalleitung 24a an dieses ausgibt.

Der Einsatz des Laser-Vibrometers 22 hat den Vorteil, daß dieses in einem sehr großen Abstand d von der Walzenoberfläche 12b angeordnet werden kann, beispielsweise in einem Abstand d von mehr als einem Meter. Derart groß bemessene Abstände stellen zum einen sicher, daß für die Wartungs- oder/und Bedienungsperson P im Bereich der Walze 12 ausreichend Raum zur Verfügung steht, um dieser ungehinderten Zugriff auf die Walzenoberfläche 12b zu gewähren. Darüber hinaus ist durch den großen Abstand zwischen Walzenoberfläche 12b und Laser-Vibrometer 22 sichergestellt, daß das Laser-Vibrometer bei einem Abriß der Materialbahn 16 und dem hieraus häufig resultierenden "Einpacken" der Walze 12 nicht durch die Materialbahn 16 beschädigt wird. Darüber hinaus kann das Laser-Vibrometer 22 vor Verschmutzung durch Spritzer des Auftragsmediums 18 geschützt werden. Schlimmstenfalls ist hierzu zusätzlich ein in Fig. 1 nicht dargestelltes einfaches Blendensystem erforderlich. Aufgrund des großen Abstands von der Walzenoberfläche 12b kann das Laser-Vibrometer 22 ferner ohne weiteres im Bereich der Maschinenmitte, d.h. im Bereich der Längsmitte der Walze 12, angeordnet werden, also in einem Bereich, in weichem die Schwingungen der Walze 12 zu sehr starken Ausschlägen der Walzenoberfläche 12b führen und somit eine sehr präzise Erfassung der Schwingungen der Walze 12 ermöglichen.

Als weiterer Sensortyp zur Erfassung der Schwingungen der Walze 12 sind in Fig. 1 druck- oder/und zug-sensitive Elemente 28 dargestellt, welche an der Innenfläche 12c des Walzenmantels 12d angebracht sind. Die druck- oder/und, zug-sensitiven Elemente 28 können beispielsweise von herkömmlichen Dehnungsmeßstreifen gebildet sein. Es ist jedoch ebenso möglich, jede andere Art von druck- oder/und zug-sensitiven Elementen, Filmen und dergleichen einzusetzen. Da ein einzelnes dieser Elemente 28 die Schwingungen der Walze 12 nur an einer bestimmten Stelle dieser Walze erfassen kann, ist es von Vorteil, über den Umfang der Walze 12 eine Mehrzahl derartiger druck- oder/und zugsensitiver Elemente 28 anzuordnen, wie dies in Fig. 1 für einen Teil des Innenumfangs der Walze 12 angedeutet ist. Die Erfassungssignale der Elemente 28 werden wiederum über Signalleitungen 28a oder/und zur Vermeidung von rotationskompatiblen Verbindungen radiometrisch an die Steuereinheit 24 übermittelt, die diese bei der Ermittlung der Stellsignale für das Kraftgerät 20 berücksichtigt.

Da die in Maschinen zum Herstellen oder/und Beschichten von Materialbahnen, insbesondere aus Papier oder Karton, eingesetzten Walzen häufig gekühlt werden müssen, wird empfohlen, entweder nur solche druck- oder/und zug-sensitiven Elemente 28 einzusetzen, die gegenüber dem Kühlmedium, beispielsweise Kühlwasser, resistent sind, oder aber diese Elemente 28 mit einer Schutzschicht bzw. Schutzabdeckung zu versehen. Aufgrund der Anordnung der Elemente 28 an der Innenseite 12c des Walzenmantels 12d sind diese vor einer Beschädigung durch die Materialbahn 16 bei einem "Einpacken" der Walze 12 bzw. vor Verschmutzung durch Spritzer des Beschichtungsmediums 18 geschützt und können ferner den Zugriff der Wartungs- oder/und Bedienungsperson P auf die Walzenoberfläche 12b nicht behindern.

In der Schnittdarstellung gemäß Fig. 2 sind zusätzlich zu dem Laser-Vibrometer 22 und dem druck- oder/und zug-sensitiven Element 28 noch weitere Sensoreinheiten zur Erfassung der Schwingungen der Walze 12 dargestellt:

So ist beispielsweise an der Außenseite des Walzenmantels 12d ein von den unabhängigen Ansprüchen des vorliegenden Patents nicht erfassten druck- oder/und zug-sensitives Element 30 angeordnet, welches durch eine Schicht 32 aus Gummi oder gummiartigem Material, Kunststoff oder dergleichen vor Beschädigung oder/und Verschmutzung geschützt ist. Aufgrund der Tatsache, daß das Element 33 unter der eigentlichen Walzenoberfläche 12b, nämlich der Oberfläche der Schicht 32, angeordnet ist, kann es den Zugriff der Bedienungsperson P auf die Walzenoberfläche 12b nicht behindern. Die Erfassungssignale des Elements 30 können über eine Signalleitung 30a der Steuereinheit 24 zugeführt und bei der Bestimmung der Stellsignale für das Kraftgerät 20 berücksichtigt werden.

Als weitere Sensoreinheit ist in Fig. 2 ein Laser-Interferometer 34 dargestellt, welches die mechanischen Spannungszustände der Walze 12 erfaßt und ein entsprechendes Erfassungssignal über eine Signalleitung 34a an die Steuereinheit 24 übermittelt. Derartige Laser-Interferometer sind beispielsweise aus der zerstörungsfreien Werkstoffanalyse bekannt. Ihr Einsatz macht sich die Tatsache zunutze, daß nicht nur im Bereich der Maschinenmitte, d.h. der Längsmitte der Walze 12, sehr hohe mechanische Spannungen in der Walze 12 auftreten, sondern auch im Bereich der Deckelabschnitte 12e der Walze 12, d.h. zwischen dem Walzenmantel 12d und den Walzenzapfen 12a, und dort insbesondere im Bereich der Übergänge zwischen dem Deckelabschnitt 12e und dem Walzenmantel 12d bzw. im Bereich des Übergangs zwischen dem Deckelabschnitt 12e und dem Walzenzapfen 12a.

Im Ausführungsbeispiel gemäß Fig. 2 ist das Laser-Interferometer 34 auf den Übergang zwischen dem Walzenmantel 12d und dem Walzendeckel 12e gerichtet. Dies hat den Vorteil, daß das Laser-Interferometer 34 neben der Walze 12 angeordnet werden kann und so ungehinderten Zugriff auf die Walzenoberfläche 12b ermöglicht. Darüber hinaus kann auch das Laser-Interferometer 34 in großer Entfernung von der Walze 12 angeordnet werden.

Schließlich ist in der Darstellung gemäß Fig. 2 im Bereich des Lagers 36 des Walzenzapfens 12a noch ein Beschleunigungssensor 38 vorgesehen, der die Schwingungen der Walze 12 aufgrund der Radialbeschleunigung der Walzenzapfen 12a erfaßt. Derartige Beschleunigungssensoren 38 sind im Stand der Technik bekannt. Derzeit werden sie jedoch lediglich gelegentlich aktiviert, um den Verschleißzustand des Lagers 36 zu überprüfen. Bei Einsatz geeignet empfindlicher und dauerbetriebsfähiger Beschleunigungssensoren 38 können diese sowohl zur Verschleißüberwachung als auch zur Erfassung von Schwingungen der Walze 12 eingesetzt werden. Die Erfassungssignale der Beschleunigungssensoren 38 werden der Steuereinheit 24 über Signalleitungen 38a zugeführt.

Da zu erwarten ist, daß sich das Frequenzspektrum der Schwingungen der Walze 12 in Abhängigkeit von den jeweiligen Betriebsbedingungen der Walze 12 bzw. der gesamten Maschine zum Herstellen oder/und Beschichten der Materialbahn 16 ändern wird, das Empfindlichkeits-Frequenzspektrum der Sensoren jedoch fest vorgegeben ist, kann vorgesehen sein, daß die Steuereinheit 24 die Erfassungssignale wenigstens zweier der Sensoren 22, 28, 30, 34 und 38 bei der Bestimmung des Stellsignals für das Kraftgerät 20 in geeigneter Weise miteinander kombiniert, beispielsweise einander additiv oder/und subtraktiv oder/und gemittelt oder/und in Abhängigkeit der Betriebsbedingungen gewichtet oder/und in Abhängigkeit der Anordnung längs des Umfangs der Walze 12 phasenkorrigiert überlagert.

Nachzutragen ist noch, daß etwaig auftretende Eigenbewegungen, insbesondere Eigenschwingungen, von an Maschinenteilen montierten Sensoreinrichtungen, beispielsweise von im Bereich der Maschinenmitte montierten Sensoreinrichtungen, bei der Interpretation der Erfassungssignale dieser Sensoreinrichtungen berücksichtigt werden müssen.

## Patentansprüche

1. Vorrichtung (10) zum aktiven Schwächen unerwünschter Schwingungen einer rotierenden Walze (12), umfassend:
wenigstens eine Schwingungserfassungs-Sensoreinrichtung (22, 28, 30, 34) und
wenigstens eine Kraftgeräteinrichtung (20), welche in Abhängigkeit des Erfassungsergebnisses auf die Walze (12) im Sinne einer Schwächung der unerwünschten Schwingungen einwirkt, wobei die Schwingungserfassungs-Sensoreinrichtung eine Mehrzahl von Sensoren (28, 30) umfaßt, die über den Umfang der Walze (12) bezüglich deren Rotationsachse (A) radial innerhalb der im wesentlichen kreiszylindrischen äußeren Oberfläche (12b) der Walze (12) angeordnet sind,
**dadurch gekennzeichnet, daß** die Sensoren druck- oder/und zug-sensitive Elemente (28, 30), beispielsweise Dehnungsmeßstreifen, umfassen, welche an der Innenfläche (12c) des Walzenzylinders (12d) angeordnet sind.

2. Vorrichtung (10) zum aktiven Schwächen unerwünschter Schwingungen einer rotierenden Walze (12) bei einer Maschine mit zwei Walzen (12, 13), die zwischen sich einen Spalt (15) bilden, durch den sich eine Materialbahn (16) hindurchbewegt, umfassend:
wenigstens eine Schwingungserfassungs-Sensoreinrichtung (22, 28, 30, 34) und wenigstens eine Kraftgeräteinrichtung (20), welche in Abhängigkeit des Erfassungsergebnisses auf die Walze (12) im Sinne einer Schwächung der unerwünschten Schwingungen einwirkt und
welche wenigstens eine optische Sensoreinheit (22, 34) umfaßt, die von der im wesentlichen kreiszylindrischen äußeren Oberfläche (12b) der Walze (12) entfernt angeordnet ist,
**dadurch gekennzeichnet, daß** die optische Sensoreinheit (22) in der Verbindungsebene (E) der Achsen (12a, 13a) der beiden Walzen (12, 13) angeordnet ist.

3. Vorrichtung (10) zum aktiven Schwächen unerwünschter Schwingungen einer rotierenden Walze (12), umfassend:
wenigstens eine Schwingungserfassungs-Sensoreinrichtung (22, 28, 30, 34) und wenigstens eine Kraftgeräteinrichtung (20), welche in Abhängigkeit des Erfassungsergebnisses auf die Walze (12) im Sinne einer Schwächung der unerwünschten Schwingungen einwirkt, wobei die Schwingungserfassungs-Sensoreinrichtung wenigstens eine optische Sensoreinheit (22, 34) umfaßt, die von der im wesentlichen kreiszylindrischen äußeren Oberfläche (12b) der Walze (12) entfernt angeordnet ist,
**dadurch gekennzeichnet, daß** die optische Sensoreinheit (34) mechanische Spannungszustände der Walzenoberfläche (12b) im Bereich eines Deckelabschnitts (12e) der Walze (12) interferometrisch erfasst.

4. Vorrichtung nach Anspruch 2,
**dadurch gekennzeichnet, daß** die optische Sensoreinheit ein Laservibrometer (22) umfaßt.

5. Vorrichtung nach Anspruch 2 oder 3,
**dadurch gekennzeichnet, daß** die optische Sensoreinheit (22, 34) von der Walzenoberfläche (12b) einen Abstand von wenigstens 1 m aufweist.

6. Vorrichtung nach einem der Ansprüche 1 bis 5, ferner umfassend eine Steuereinheit (24), welche auf Grundlage von Erfassungssignalen der wenigstens einen Sensoreinrichtung (22, 28, 30, 34) Stellsignale für die wenigstens eine Kraftgeräteinheit (20) bestimmt,
**dadurch gekennzeichnet, daß** die Steuereinheit (24) zur Bestimmung der Stellsignale die Erfassungssignale einer Mehrzahl von Sensoren (22, 28, 30, 34) additiv oder/und subtraktiv oder/und gewichtet oder/und gemittelt oder/und phasenkorrigiert miteinander kombiniert.

7. Vorrichtung nach Anspruch 6,
**dadurch gekennzeichnet, daß** die Steuereinheit (24) ferner die Erfassungssignale wenigstens einer an den Lagern (36) der Walze (12) angeordneten Sensoreinrichtung (38) berücksichtigt, beispielsweise eines druck- oder/und zug-sensitiven Elements, eines Beschleunigungssensors oder dergleichen.

8. Vorrichtung nach einem der Ansprüche 1 bis 7,
**dadurch gekennzeichnet, daß** sie zum Einsatz in Maschinen zum Herstellen oder/und Veredeln, insbesondere Beschichten, einer Materialbahn (16), insbesondere aus Papier oder Karton, bestimmt ist.

## Claims

1. Apparatus (10) for the active attenuation of undesired vibrations of a rotating roll (12), comprising:
at least one vibration-registering sensor arrangement (22, 28, 30, 34) and
at least one force-applying device (20) which, depending on the registered result, acts on the roll (12) with the effect of attenuating the undesired vibrations, the vibration-registering sensor device comprising a plurality of sensors (28, 30), which are arranged over the circumference of the roll (12), with respect to the axis of rotation (A) thereof, radially within the substantially circularly cylindrical outer surface (12b) of the roll (12), **characterized in that** the sensors comprise pressure-sensitive and/or tension-sensitive elements (28, 30), for example strain gauges, which are arranged on the inner surface (12c) of the roll cylinder (12d).

2. Apparatus (10) for the active attenuation of undesirable vibration of a rotating roll (12), in a machine having two rolls (12, 13 which, between them, form a nip (15) through which a material web (16) moves, comprising:
at least one vibration-registering sensor arrangement (22, 28, 30, 34) and at least one force-applying device (20) which, depending on the registered result, acts on the roll (12) with the effect of attenuating the undesired vibrations and
which comprises at least one optical sensor unit (22, 34), which is arranged at a distance from the substantially circularly cylindrical outer surface (12b) of the roll (12), **characterized in that** the optical sensor unit (22) is arranged in the plane (E) connecting the axes (12a, 13a) of the two rolls (12, 13).

3. Apparatus (10) for the active attenuation of undesirable vibration of a rotating roll (12) comprising:
at least one vibration-registering sensor arrangement (22, 28, 30, 34) and at least one force-applying device (20) which, depending on the registered result, acts on the roll (12) with the effect of attenuating the undesired vibrations, the vibration-registering sensor device comprising at least one optical sensor unit (22, 34), which is arranged at a distance from the substantially circularly cylindrical outer surface (12b) of the roll (12), **characterized in that** the optical sensor unit (34) registers mechanical stress conditions of the roll surface (12b) in the region of a section (12e) of the cover of the roll (12) interferometrically.

4. Apparatus according to Claim 2, **characterized in that** the optical sensor unit comprises a laser vibrometer (22).

5. Apparatus according to Claim 2 or 3, **characterized in that** the optical sensor unit (22, 34) is at a distance of about 1 m from the roll surface (12b).

6. Apparatus according to one of Claims 1 to 5, further comprising a control unit (24) which, on the basis of registered signals from the at least one sensor device (22, 28, 30, 34), determines actuating signals for the at least one force-applying unit (20), **characterized in that**, in order to determine the actuating signals, the control unit (24) combines the registered signals from a plurality of sensors (22, 28, 30, 34) with one another in an additive and/or subtractive and/or weighted and/or averaged and/or phase-corrected manner.

7. Apparatus according to Claim 6, **characterized in that** the control unit (24) also takes account of the registered signals from at least one sensor device (38) which is arranged on the bearings (36) of the roll (12), for example from a pressure-sensitive and/or tension-sensitive element, an acceleration sensor or the like.

8. Apparatus according to one of Claims 1 to 7, **characterized in that** it is intended for use in machines for producing and/or finishing, in particular coating, a material web (16), in particular of paper or board.

## Revendications

1. Dispositif (10) de réduction active de vibrations non voulues d'un rouleau rotatif (12), comprenant :
au moins un dispositif détecteur enregistrant les vibrations (22, 28, 30, 34) et
au moins un appareillage motorisé (20) qui, en fonction du résultat de l'enregistrement, agit sur le rouleau (12) dans le sens d'une réduction des vibrations non voulues, le dispositif détecteur enregistrant les vibrations comprenant une pluralité de capteurs (28, 30) qui sont disposés sur la périphérie du rouleau (12), par rapport à l'axe de rotation (A) de celui-ci, radialement à l'intérieur de la surface extérieure (12b) sensiblement cylindrique du rouleau (12),
**caractérisé en ce que** les capteurs comprennent des éléments sensibles à la pression et/ou à la traction (28, 30), par exemple des bandes de mesure d'extension, qui sont disposés sur la surface intérieure (12c) du rouleau cylindrique (12d).

2. Dispositif (10) de réduction active de vibrations non voulues d'un rouleau rotatif (12)
pour une machine à deux rouleaux (12, 13) qui forment entre eux un entrefer (15) où circule une bande de matériau (16), comprenant :
au moins un dispositif détecteur enregistrant les vibrations (22, 28, 30, 34) et au moins un appareillage motorisé (20) qui, en fonction du résultat de l'enregistrement, agit sur le rouleau (12) dans le sens d'une réduction des vibrations non voulues et qui comprend au moins une unité de détection optique (22, 34) qui est disposée à distance de la surface extérieure (12b) sensiblement cylindrique du rouleau (12),
**caractérisé en ce que** l'unité de détection optique (22) est disposée dans le plan de liaison (E) des axes (12a, 13a) des deux rouleaux (12, 13).

3. Dispositif (10) de réduction active de vibrations non voulues d'un rouleau rotatif (12), comprenant :
au moins un dispositif détecteur enregistrant les vibrations (22, 28, 30, 34) et au moins un appareillage motorisé (20) qui, en fonction du résultat de l'enregistrement, agit sur le rouleau (12) dans le sens d'une réduction des vibrations non voulues, le dispositif détecteur enregistrant les vibrations comprenant au moins une unité de détection optique (22, 34) qui est disposée à distance de la surface extérieure (12b) sensiblement cylindrique du rouleau (12),
**caractérisé en ce que** l'unité de détection optique (34) enregistre des états de tension mécaniques de la surface du rouleau (12b) au niveau d'une section de couvercle (12e) du rouleau (12) par interférométrie.

4. Dispositif selon la revendication 2,
**caractérisé en ce que** l'unité de détection optique comprend un vibromètre à laser (22).

5. Dispositif selon la revendication 2 ou 3,
**caractérisé en ce que** l'unité de détection optique (22, 34) se situe à une distance d'au moins 1 m de la surface du rouleau (12b).

6. Dispositif selon l'une quelconque des revendications 1 à 5,
comprenant de plus une unité de commande (24) qui, sur la base de signaux d'enregistrement de l'au moins un dispositif détecteur (22, 28, 30, 34) définit des signaux de réglage pour l'au moins un appareillage motorisé (20),
**caractérisé en ce que** l'unité de commande (24) servant à définir les signaux de réglage combine les uns aux autres les signaux d'enregistrement d'une pluralité de capteurs (22, 28, 30, 34) de manière additive et/ou soustractive et/ou pondérée et/ou avec calcul de moyenne et/ou avec correction de phases.

7. Dispositif selon la revendication 6,
**caractérisé en ce que** l'unité de commande (24) tient en outre compte des signaux d'enregistrement d'au moins un dispositif détecteur (38) disposé sur les paliers (36) du rouleau (12), par exemple d'un élément sensible à la pression et/ou à la traction, d'un capteur d'accélération ou similaire.

8. Dispositif selon l'une quelconque des revendications 1 à 7,
**caractérisé en ce qu'**il est destiné à un usage dans des machines servant à fabriquer et/ou à affiner une bande de matériau (16) notamment en papier ou en carton.
